# EUROPÄISCHE PATENTSCHRIFT

(11) **EP 0 449 850 B1**
(45) Veröffentlichungstag und Bekanntmachung des Hinweises auf die Patenterteilung: **08.09.1993**
(21) Anmeldenummer: 89913030.6
(22) Anmeldetag: 29.11.1989
(51) Int. Cl.: B23Q 11/00, B23D 59/00

(54) **HANDKREISSÄGE**
HAND CIRCULAR SAW
SCIE CIRCULAIRE A MAIN

(30) Priorität: 22.12.1988 DE 3843236
(43) Veröffentlichungstag der Anmeldung: 09.10.1991
(73) Patentinhaber: ROBERT BOSCH GMBH, 70442 Stuttgart (DE)
(72) Erfinder: BLÖCHLE, Hans, D-7257 Ditzingen 5 (DE); SCHILLING, Rainer, D-7000 Stuttgart 80 (DE); KUMMER, Martin, D-7024 Filderstadt (DE); GANSEL, Eduard, D-7405 Dettenhausen (DE); SCHRAMM, Heriberg, D-7000 Stuttgart 70 (DE); EBLEN, Helmut, D-7000 Stuttgart 80 (DE); MÜLLER, Joachim, D-7000 Stuttgart 70 (DE)
(86) Internationale Anmeldenummer: DE8900742
(87) Internationale Veröffentlichungsnummer: WO9006832

(56) Entgegenhaltungen:
- DE-A- 3 500 371
- DE-A- 3 615 736
- DE-C- 644 011
- FR-A- 2 203 693
- GB-A- 2 111 192

## Beschreibung

Die Erfindung geht aus von einer Kreissäge nach der Gattung des Anspruchs 1. Aus der DE 35 25 092 A1 ist bereits eine Kreissäge bekannt, bei der die Sägespäne im Schutzgehäuse des Sägeblattes gesammelt und zu einer Austrittsöffnung befördert werden. Zur Unterstützung der Spanförderung wird Luft vom Kühlgebläse über einen Schlauch in das Schutzgehäuse eingeführt. Diese Konstruktion ist wegen der benötigten zusätzlichen Stutzen und des separaten Schlauches recht aufwendig. Bei der mehrmaligen Umlenkung der Strömungsrichtung in dem Schlauch tritt ein erheblicher Druckverlust auf. Außerdem kann der Schlauch beim Arbeiten hinderlich sein.

### Vorteile der Erfindung

Die erfindungsgemäße Handkreissäge mit den kennzeichnenden Merkmalen des Anspruchs 1 hat demgegenüber den Vorteil, daß die Spanabfuhr mit einfachsten Mitteln und ohne zusätzliche Bauelemente in ihrer Wirkung verbessert und die Fertigung und die Montage der Säge vereinfacht wird. Dies wird dadurch erreicht, daß die Gebläseabluft auf kurzem Weg innerhalb des Getriebegehäuses direkt in den Spänekanal eingeleitet wird. Die Gebläseluftkanäle sind so ausgebildet, daß keine zusätzlichen Teile benötigt werden. Die Außenabmessungen der Säge werden nicht verändert, so daß die Handlichkeit in keiner Weise beeinträchtigt ist.

Durch die in den Ansprüchen 2 ff aufgeführten Maßnahmen sind vorteilhafte Weiterbildungen und Verbesserungen der in Anspruch 1 angegebenen Kreissäge möglich. Besonders vorteilhaft ist es, die Pendelschutzhaube oder das Sägeblatt selbst als Begrenzungswand für den Gebläsekanal zu verwenden. Dies ermöglicht eine gießtechnisch sehr einfache Ausbildung des Kanals, ohne daß zusätzliche Kerne oder Schieber notwendig werden oder bei der Montage zusätzliche Teile eingefügt werden müssen. Die Spanabfuhr wird auch dadurch verbessert, daß dafür ein besonderer Kanal gebildet ist, in dem die Späne auf einer definierten Bahn bewegt werden. Durch die in Strömungsrichtung parallele Einführung der Gebläseabluft in den Spankanal wird deren Energie optimal ausgenutzt. Die Anordnung der Gebläselufteintrittsöffnung wirkt etwaigen Verstopfungen im Spänekanal entgegen.

### Zeichnung

Zwei Ausführungsbeispiele der Erfindung sind in der Zeichnung dargestellt und in der nachfolgenden Beschreibung näher erläutert. Figur 1 zeigt einen Längsschnitt durch eine Handkreissäge gemäß Linie I-I in Figur 2. Figur 2 zeigt eine Vorderansicht des Getriebegehäuses bei abgenommener Abdeckhaube, jedoch mit Pendelschutzhaube und eingesetztem Sägeblatt. Figur 3 zeigt eine Draufsicht auf das Schutzgehäuse. Figur 4 zeigt ein zweites Ausführungsbeispiel im Längsschnitt.

### Beschreibung der Ausführungsbeispiele

Die Handkreissäge 1 hat ein Gehäuse 2, in dem ein Motor 3 mit Gebläserad 4 untergebracht ist. An das Gehäuse 2 schließt sich ein Getriebegehäuse 5 an, das ein Getriebe 6 und ein Sägeblatt 7 aufnimmt.

Das vorzugsweise gegossene Getriebegehäuse 5 ist von einer Haube 8 abgedeckt und bildet mit dieser zusammen ein Schutzgehäuse für das Sägeblatt. In dem Gehäuse 5 ist drehbar eine das Sägeblatt umgebende Pendelschutzhaube 9 angeordnet. Die Kreissäge liegt mit ihrem Auflagetisch 10 an einem Werkstück 11 an.

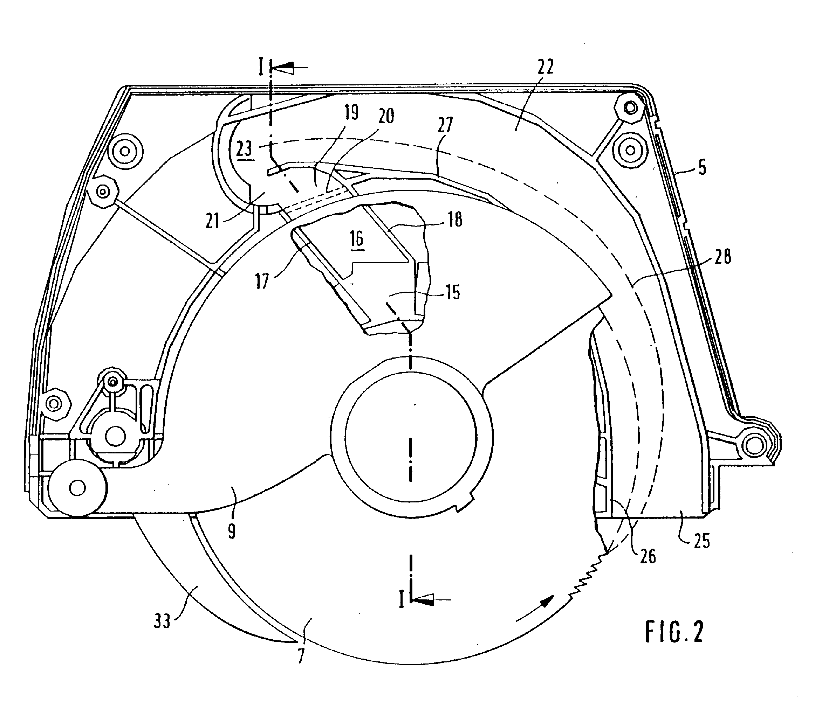

Das Gebläserad 4 sitzt direkt auf der Antriebswelle 12 des Motors und saugt durch Schlitze 13 im Gehäuse 2 Luft an, die zur Kühlung an dem Motor 3 entlang geführt wird. Die von der Kühlung kommende Gebläseabluft wird weiter durch einen Kanal 14 in Richtung Sägeblatt 7 geführt. Von einer Deckwand 15 wird die Luft um 90° umgelenkt und durch den Radialkanal 16 radial auswärts geleitet. Dieser wird durch Seitenwände 17,18 (siehe auch Fig. 2) und zum Sägeblatt hin durch eine Seitenwand der Pendelschutzhaube 9 begrenzt. Der Kanal 14 und der Radialkanal 16 sind gießtechnisch in einer einfachen zweiteiligen kernlosen Form herstellbar, da verdeckte Hohlräume vermieden wurden. Das wird dadurch erreicht, daß sich die Deckwand 15 nur bis zu der den Kanal 14 begrenzenden Auffenwand des Gehäuses 5 erstreckt, d.h. in der Ausformrichtung des Gußgehäuses 5 gesehen, die parallel zur Achse des Motorritzels 30 verläuft, überschneidet sich die Deckwand 15 nicht mit anderen Teilen des Gehäuses 5. Im Kanal 16 übernimmt die Pendelschutzhaube 9 die Funktion der vierten Kanalwand. An den Kanal 16 schließt sich ein Kanalstück 19 an, das sich über die ganze Breite des Schutzgehäuses 5,8 erstreckt und in zum Sägeblatt tangentialer Richtung gebogen ist. Das Kanalstück 19 wird zur Pendelschutzhaube hin begrenzt von einer Zwischenwand 20, die an der Haube 8 angeordnet ist. Die Mündung des Kanalstücks 19 bildet eine Öffnung 21, die dieses mit einem im Schutzgehäuse 5,8 angeordneten Spänekanal 22 verbindet. Die Mündung gibt der Gebläseluft etwa die gleiche Richtung, in der auch die Luft im Spänekanal 22 strömt.

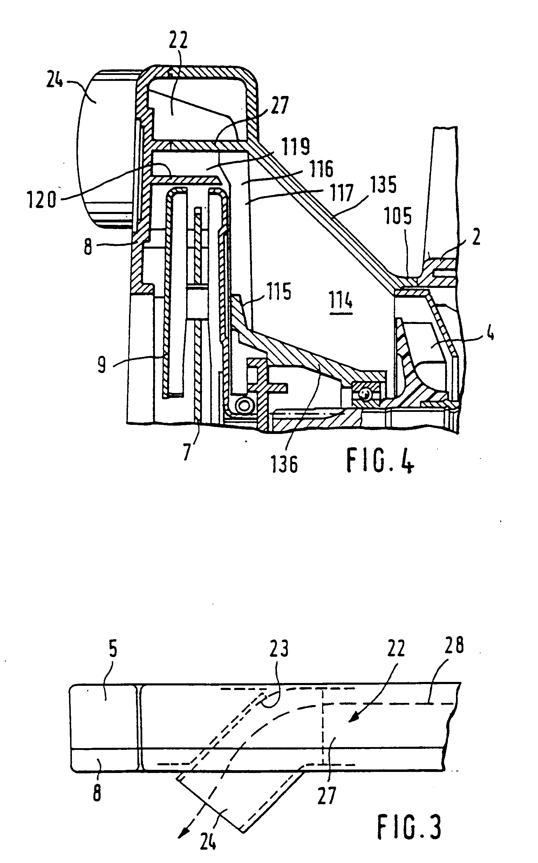

Die Öffnung 21 liegt an einer solchen Stelle im Spänekanal, an der sich evtl. Späne absetzen und Verstopfungen auftreten können. Kurz nach der Öffnung 21 verläuft der Spänekanal 22 in einer Biegung 23 und mündet in einer seitwärts gerichteten Austrittsöffnung 24, die als Stutzen ausgebildet ist und an die beispielsweise ein Absaugschlauch zur Abfuhr der Späne angeschlossen werden kann (siehe auch Fig. 3). Der Spänekanal 22 verläuft von der Austrittsöffnung 24 aus spiralig leicht nach innen gewandt zu seiner Eintrittsöffnung 25. Das Sägeblatt 7 taucht teilweise in den Spänekanal 22 ein. Die innere Spänekanalwand 26 bildet in diesem Bereich einen Schlitz zum Durchtritt des Sägeblatts 7 und im weiteren Verlauf zum Durchtritt der Pendelschutzhaube 9. Im oberen Bereich ist die innere Spänekanalwand 27 vollständig geschlossen bis hin zu der Öffnung 21. Mit der gestrichelten Linie 28 ist der Weg eines Sägespans angedeutet.

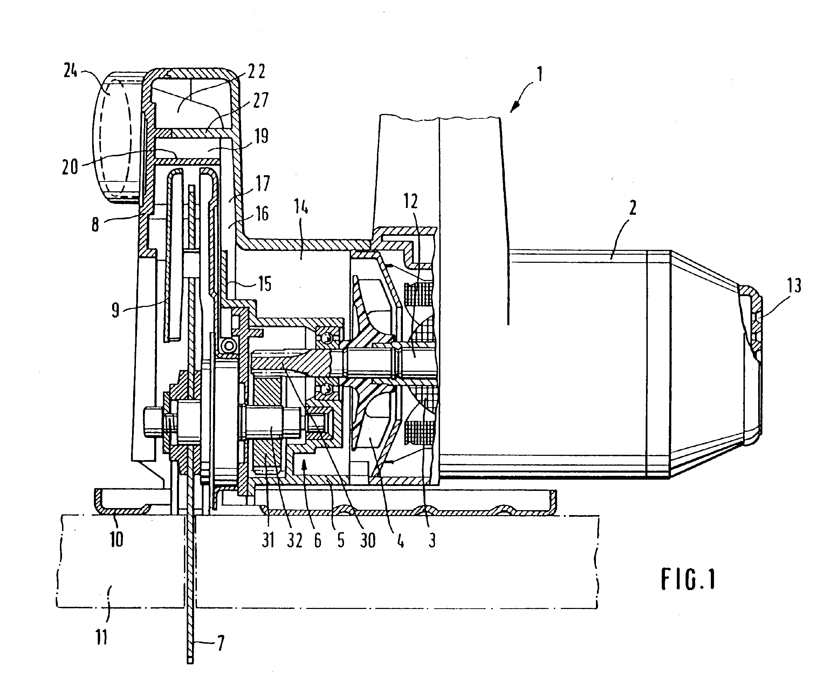

Der Antrieb des Sägeblatts 7 erfolgt über ein Ritzel 30, das auf der Antriebswelle 13 sitzt und mit einem Zahnrad 31 kämmt. Dieses ist mit einer Welle 32 verbunden, auf der auch das Sägeblatt befestigt ist. Konzentrisch zu der Welle 32 ist die Pendelschutzhaube 9 drehbar angeordnet, sodaß sie bei Nichtbenutzung der Säge den über den Auflagetisch 10 hinausstehenden Teil des Sägeblatts 7 bedeckt. Um mit einem Spaltkeil 33 nicht zu kollidieren, ist die Pendelschutzhaube mittig geschlitzt (siehe Fig. 1).

Zum Sägen wird die Pendelschutzhaube 9 nach innen in das Schutzgehäuse 5,8 gedreht wie in der Zeichnung gezeigt. Die entstehenden Späne werden mit der in Pfeilrichtung erfolgenden Drehung des Sägeblatts über die Eintrittsöffnung 25 in den Spänekanal 22 eingeführt. Die Bewegungsenergie der Späne und die durch die Drehung des Sägeblatts 7 entstehende Luftströmung reichen aus, die Späne bis weit in den Kanal 22 einzutragen. Die kinetische Energie reicht jedoch nicht immer aus, die Späne bis zur Austrittsöffnung 24 weiterzufördern, inbesondere dann, wenn sich dort noch eine Umlenkstelle befindet, um die Späne seitwärts von der Maschine wegzuführen. Wenn die Späne an der Biegung 23 im Kanal 22 liegenbleiben, droht der Kanal zu verstopfen. Erfindungsgemäß wird daher im hinteren Bereich des Spänekanals die Gebläseabluft von der Motorkühlung parallel zu der Bewegungsrichtung des Spangutes in den Spänekanal eingeleitet. Die Kühlungsabluft erzeugt in Strömungsrichtung gesehen im Bereich vor der Öffnung 21 einen Unterdruck in dem Kanal 22, der die Spanpartikel mitreißt. Im Bereich nach der Öffnung, insbesondere in der Biegung 23, erzeugt die Abluft eine verstärkte Strömung, die die Späne aus dem Kanal 22 austrägt.

Das zweite Ausführungsbeispiel nach Figur 3 entspricht dem ersten bis auf die Ausbildung des Kanals 114,116. Gleiche Teile tragen daher gleiche Bezugszahlen.

Das Getriebegehäuse 105 hat zur Begrenzung der ineinander übergehenden Kanalabschnitte 114,116 eine schräg vom Gebläserad 4 direkt zum Spänekanal 22 verlaufende Wandung 135. Die gegenüberliegende Wand 136 verläuft in gleichem Sinne schräg. Eine etwa parallel zum Sägeblatt angeordnete Deckwand 115 schließt sich daran an. Die Zwischenwand 120 ist gegenüber der aus dem ersten Ausführungsbeispiel etwas verkürzt, um eine gleichförmigere Strömung zu erzielen. Die Radialwand 117 ist im Bereich des Kanalstücks 119 etwas erhöht. Durch alle diese Maßnahmen werden abrupte Umlenkungen der Gebläseluftströmung, die zu Energieverlusten führen, vermieden und damit die Wirksamkeit der Spanabsaugung zusätzlich verbessert. Im übrigen entspricht die Funktion der des ersten Ausführungsbeispiels.

Die Erfindung beschränkt sich nicht auf die gezeigten Ausführungsbeispiele. Sie ist insbesondere auch auf Sägen mit anderen Schutzgehäusekonstruktionen anwendbar. So z.B. auf solche ohne Pendelschutzhauben oder auf sogenannte Tauchsägen. In diesen Fällen reicht der Kanal 16 bzw. 116 zum Beispiel mit erhöhten Seitenwänden 17, 18 bis an das Sägeblatt heran, sodaß dieses den Kanal begrenzt. Es kann aber auch eine separate Zwischenwand zur Begrenzung des Geläseluftkanals vorgesehen werden.

## Patentansprüche

1. Handkreissäge mit einem Gehäuse (2) und einem Auflagetisch (10) einem von einem Motor (3) rotierend angetriebenen Sägeblatt (7), das oberhalb des Auflagetisches (10) von einem Schutzgehäuse (5,8) umgeben ist, das zur Abfuhr von Sägespänen eine Eintritts- und eine Austrittsöffnung (25, 24) sowie eine dritte Öffnung (21) zur Zufuhr von Gebläseluft aufweist, die von einem auf der Antriebswelle (12) des Motors (3) sitzenden Gebläserad (4) erzeugt wird, dadurch gekennzeichnnet, daß die Öffnung (21) zur Gebläseluftzufuhr mit einem Kanal (14, 16, 19) verbunden ist, der im Getriebegehäuse (5) der Kreissäge (1) verläuft und mit der Abluftseite des Gebläserades (4) verbunden ist und daß die Öffnung (21) in Strömungsrichtung unmittelbar vor einer Umlenkstelle (23) in einen in dem Schutzgehäuse (5,8) gebildeten Spänekanal (22) hineinführt.

2. Handkreissäge nach Anspruch 1, dadurch gekennzeichnet, daß sie eine den über den Auflagetisch (10) hinausstehenden Teil des Sägeblattes (7) überdeckende an sich bekannte Pendelschutzhaube (9) aufweist, die beim Sägen in das Schutzgehäuse (5, 8) einschwenkbar ist und daß die Pendelschutzhaube (9) eine Begrenzungswand des Kanals (16) bildet.

3. Handkreissäge nach Anspruch 1, dadurch gekennzeichnet, daß das Sägeblatt 7 eine Begrenzungswand des Kanals 16 bildet.

4. Handkreissäge nach einem der vorhergehenden Ansprüche, dadurch gekennzeichnet, daß das Sägeblatt (7) teilweise in den Spänekanal (22) eingreift und dieser senkrecht zum Sägeblatt (7) verlaufende und dem Sägeblatt zugewandte Begrenzungswände (26, 27) aufweist.

5. Handkreissäge nach einem der vorhergehenden Ansprüche, dadurch gekennzeichnet, daß die vom Gebläserad (4) kommende Luft von einer Deckwand (15, 115), die etwa parallel zur Sägeblattebene verläuft, umgelenkt wird.

6. Handkreissäge nach einem der vorhergehenden Ansprüche, dadurch gekennzeichnet, daß der Spänekanal (22) in dem Bereich vor der Öffnung (21) gegenüber dem Schutzgehäuse (5, 8) vollständig geschlossen ist.

7. Handkreissäge nach einem der vorhergehenden Ansprüche, dadurch gekennzeichnet, daß die Öffnung (21) und der Kanal (16, 19) so gestaltet sind, daß die Gebläseluft mit etwa gleicher Strömungsrichtung in den Spänekanal (22) einströmt, mit der die spänebeladene Luft strömt.

8. Handkreissäge nach einem der vorhergehenden Ansprüche, dadurch gekennzeichnet, daß der Kanal (16, 116) im wesentlichen in radialer Richtung vom Gebläserad (4) zur Öffnung (21) verläuft.

9. Handkreissäge nach einem der vorhergehenden Ansprüche, dadurch gekennzeichnet, daß der Kanal (14, 114, 16, 116, 19, 119) so ausgebildet ist, daß er sich gießtechnisch leicht fertigen läßt, indem die Deckwand (15,115) sich - senkrecht zur Ausformrichtung gesehen - nicht mit anderen Wänden des Gehäuses (5) überschneidet.

10. Handkreissäge nach einem der vorhergehenden Ansprüche, dadurch gekennzeichnet, daß die Kanalwände (135, 136) zwischen Gebläserad (4) und Spankanal (22) schräg verlaufen, um einen im wesentlichen geradlinigen Kanal (114, 116) ohne abrupte Umlenkungen zu bilden.

## Claims

1. Hand-held circular saw comprising a casing (2), a support table (10) and a saw blade (7) which is rotationally driven by a motor (3) and above the support table (10) is enclosed by a guard casing (5, 8) which has an inlet opening and an outlet opening (25, 24) for the removal of sawdust and also has a third opening (21) for supplying blower air produced by a blower wheel (4) mounted on the drive shaft (12) of the motor (3), characterised in that the opening (21) supplying blower air is connected to a duct (14, 16, 19) which extends in the gearing casing (5) of the circular saw (1) and is connected to the outgoing air side of the blower wheel (4), and in that the opening (21) leads into a sawdust duct (22), which is formed in the guard casing (5, 8), directly upstream (in the direction of flow) of a deflection point (23).

2. Hand-held circular saw according to Claim 1, characterised in that it has a swinging guard hood (9), known per se, which covers the part of the saw blade (7) projecting beyond the support table (10) and which during sawing can be swivelled into the guard casing (5, 8), and in that the swinging guard hood (9) forms a bounding wall of the duct (16).

3. Hand-held circular saw according to Claim 1, charac- terised in that the saw blade (7) forms a bounding wall of the duct (16).

4. Hand-held circular saw according to one of the preceding claims, characterised in that the saw blade (7) partly penetrates into the sawdust duct (22) and the latter has bounding walls (26, 27) extending at right angles to the saw blade (7) and facing the saw blade.

5. Hand-held circular saw according to one of the preceding claims, characterised in that the air coming from the blower wheel (4) is deflected by a cover wall (15, 115) extending approximately parallel to the plane of the saw blade.

6. Hand-held circular saw according to one of the preceding claims, characterised in that in the region upstream of the opening (21) the sawdust duct (22) is completely closed relative to the guard casing (5, 8).

7. Hand-held circular saw according to one of the preceding claims, characterised in that the opening (21) and the duct (16, 19) have a configuration such that the blower air flows into the sawdust duct (22) in approximately the same direction of flow as that of the sawdust-laden air.

8. Hand-held circular saw according to one of the preceding claims, characterised in that the duct (16, 116) extends substantially in the radial direction from the blower wheel (4) to the opening (21).

9. Hand-held circular saw according to one of the preceding claims, characterised in that the duct (14, 114, 16, 116, 19, 119) has a configuration such that it can easily be produced by casting because the cover wall (15, 115), viewed at right angles to the releasing direction, does not intersect other walls of the casing (5).

10. Hand-held circular saw according to one of the preceding claims, characterised in that the duct walls (135, 136) extend obliquely between the blower wheel (4) and the sawdust duct (22) in order to form a substantially rectilinear duct (114, 116) without abrupt deflections.

## Revendications

1. Scie circulaire à main comportant un carter (2), une table d'appui (10), un moteur (3) entraînant une lame de scie (7) entourée, au-dessus de la table (10) par un carter de protection (5, 8) équipé d'orifices d'entrée et de sortie (24, 25) des copeaux ainsi que d'un troisième orifice (21) servant à évacuer l'air produit par une roue de ventilateur (4) montée sur l'arbre d'entraînement (12) du moteur (3), scie caractérisée en ce que l'orifice (21) d'évacuation d'air de soufflage est relié à un canal (14, 16, 19) situé dans le carter de transmission (5) de la lame de scie (1) et relié à la face de sortie de la roue de ventilateur (4), l'orifice (21) débouchant dans un canal à copeaux (22) réalisé dans le carter de protection (5, 8), directement en amont, par rapport au sens d'écoulement, d'une déviation (23).

2. Scie circulaire à main selon la revendication 1, caractérisée en ce qu'elle comporte, de manière connue, pour recouvrir la partie de la lame (7) située au-dessus de la table d'appui (10), un capot de protection basculant (9) qui, au moment du sciage, peut rentrer dans le carter de protection (5, 8) et qui constitue une des parois délimitant le canal (16).

3. Scie circulaire selon la revendication 1, caractérisée en ce que la lame de scie (7) constitue une des parois délimitant le canal (16).

4. Scie circulaire selon l'une des revendications précédentes, caractérisée en ce que la lame de scie (7) pénètre partiellement dans le canal à copeaux (22) qui est délimité par des parois (26, 27) perpendiculaires à cette lame et dirigées vers elle.

5. Scie circulaire selon l'une des revendications précédentes, caractérisée en ce que l'air provenant de la roue de ventilateur (4) est dévié par une pari de couverture (15, 115), sensiblement parallèle à la lame de scie.

6. Scie circulaire selon l'une des revendications précédentes, caractérisée en ce que le canal à copeaux (22), dans sa partie en amont de l'orifice (21), est totalement isolé du carter de protection (5, 8).

7. Scie circulaire selon l'une des revendications précédentes, caractérisée en ce que l'orifice (21) et le canal (16, 19) sont disposés de manière que l'air de soufflage est introduit dans le canal à copeaux (22) sensiblement selon la même direction que l'air chargé de copeaux.

8. Scie circulaire selon l'une des revendications précédentes, caractérisée en ce que le canal (16, 116) est orienté sensiblement radialement, depuis la roue de ventilateur (4) jusqu'à l'orifice (21).

9. Scie circulaire selon l'une des revendications précédentes, caractérisée en ce que le canal (4, 14, 16, 116, 19, 119) présente une disposition permettant de le réaliser facilement par coulée, la paroi de couverture (15, 115), vue selon une direction perpendiculaire à celle de démoulage ne chevauchant aucune des autres parois du carter (5).

10. Scie circulaire selon l'une des revendications précédentes, caractérisée en ce que les parois (135, 136) du canal entre la roue de ventilateur (4) et le canal à copeaux (22) sont dirigées obliquement de manière à délimiter un canal (114, 116) sensiblement rectiligne et dépourvu de déviations brusques.
